Europäisches Patentamt

European Patent Office

Office européen des brevets

(11) Publication number: **0 474 718 B1**

## (12) EUROPEAN PATENT SPECIFICATION

(45) Date of publication of patent specification: **07.12.94**

(51) Int. Cl.5: **C09D 163/00**, C09D 167/06, C09D 175/04, C09D 201/00

(21) Application number: **90908570.6**

(22) Date of filing: **04.06.90**

(86) International application number: **PCT/GB90/00862**

(87) International publication number: **WO 90/15109 (13.12.90 90/28)**

The file contains technical information submitted after the application was filed and not included in this specification

(54) COATING OF METAL SURFACES.

(30) Priority: **02.06.89 GB 8912683**

(43) Date of publication of application:
**18.03.92 Bulletin 92/12**

(45) Publication of the grant of the patent:
**07.12.94 Bulletin 94/49**

(84) Designated Contracting States:
**AT BE CH DE DK ES FR IT LI LU NL SE**

(56) References cited:
**EP-A- 0 219 928**
**EP-A- 0 234 774**
**FR-A- 2 173 210**

(73) Proprietor: **BELZONA METALIFE LIMITED**
**Claro Road**
**Harrogate North Yorkshire, HG1 4AY (GB)**

(72) Inventor: **BATTEY, Paul, Kenneth**
**24 Masham Close**
**Harrogate HG2 8OG (GB)**
Inventor: **COLLETT, Richard, William, Robert**
**60 Bilton Lane**
**Harrogate HG1 3DU (GB)**
Inventor: **CAMPBELL, Ronald**
**4 Coleridge Drive**
**Harrogate HG1 3LS (GB)**

(74) Representative: **Orr, William McLean et al**
**UROUHART-DYKES & LORD**
**8th Floor, Tower House**
**Merrion Way**
**Leeds West Yorkshire, LS2 8PA (GB)**

## Description

This invention is concerned generally with the coating of metal surfaces which are contacted by a moving body of solid, liquid or gaseous material in service, with a view to reducing frictional losses. However, the invention has been developed particularly, though not exclusively, with a view to improving the handling efficiency of liquid-conveying metal surfaces.

In liquid conveyance systems, it is important that the liquid contacting surfaces, eg the inner walls of pipes and conduits, the inner surfaces of pump casings, and the surfaces of pump impellers, should be made as smooth as possible to reduce frictional drag.

In the case of liquid contacting surfaces made of metal, these surfaces are generally made as smooth as possible during initial fabrication, but there is an accepted classification of standard roughness factors which are taken account of when designing fluid handling equipment from the standpoint of calculating frictional losses. When designing a pumping system, therefore, these frictional losses have to be taken into account in order to compensate for the loss in pressure which will result.

Furthermore, over a period of time and use, even smooth surfaces become roughened by a variety of erosion-corrosion factors. These include: impingement, where turbulence in the liquid is such that it bombards the surface of the equipment, thereby accelerating the eating away of the protective oxide film; cavitation, which arises when the turbulence in a liquid causes cavities to be formed and as these implode shock waves are generated which again removes the metal's protective oxide film; abrasion, arising by direct mechanical action of entrained solids in the liquid, such as sand or silts; and corrosion,arising through chemical or electrochemical attack from the constituents of the liquids being conveyed.

The further surface roughening effects arising through these erosion-corrosion factors significantly increase the frictional drag applied to a moving body of liquid. This reduces the operating efficiency of a liquid conveyance system, which means that energy costs of pumps to drive the liquid along the system can be significantly higher than will be the case with a newly installed system.

The surface roughening of a liquid conveying system can be overcome by periodic servicing, eg polishing of the surfaces of an impeller blade or pump casing, but this is clearly a time consuming task which will involve significant "down-time" of the piece of equipment in question, and which also, of course, will require periodic inspection and further servicing throughout the life of the piece of equipment and then, when the operating performance has deteriorated to such a low level that servicing or repair is no longer a viable option the piece of equipment will have to be replaced.

Many liquids have a strong affinity for metal surfaces as evidenced by the way that a clean steel surface is readily wet out by water. In such a situation the contact angle between the water and the steel is low as opposed to the contact angle of water and a clean sheet of a hydrophobic material, such as polytetrafluroethylene for example, where the contact angle is high. This difference in behaviour occurs because the attractive forces between molecules of water and steel are greater than the cohesive forces between molecules of water. Conversely, the attractive forces between molecules of water and polytetrafluoroethylene are lower than the cohesive forces between molecules of water, and as a result water applied to polytetrafluoroethylene will tend to form into globules due to the high surface tension at the solid/liquid interface.

The classical theory of fluid mechanics states that when a liquid flows over a surface, the molecules of liquid immediately in contact with that surface will be stationary. As the next layer of molecules of liquid pass over the first, its velocity is reduced due to viscous shearing and this process is repeated from layer to layer resulting in a velocity gradient being set up at right angles to the surface. The thickness of liquid which has its velocity affected in this way is known as the "boundary layer" and as the distance the liquid travels over the surface increases, so the boundary layer thickens.

In the case of water flowing through a pipe, the boundary layer will progressively increase as the water travels down the pipe until ultimately it will completely fill the pipe circumference. Provided that turbulence is not induced, the successive layers of water molecules will continue to flow in an orderly fashion parallel to the pipe walls and the flow will be described as "fully developed laminar flow". Once this steady state has been reached, the pressure drop per unit length of pipe will also have become constant.

As the velocity of the liquid in the pipe is increased a point will be reached when the flow changes from laminar to turbulent. This point can be calculated from the so called Reynolds'number which represents the ratio of inertial forces and viscous forces that exist in the pipe. Thus, Reynolds' number can be expressed mathematically by the equation:

2

$$Re = \left(\frac{\rho\, v\, d}{\eta}\right)$$

where

Re   = Reynolds' number
$\rho$   = density of the fluid
v   = velocity of the fluid
d   = pipeline diameter
$\eta$   = dynamic viscosity

Based on experimental results it is known that if the Reynolds' number is less than 2,000, flow will be laminar. At Reynolds' number 2,000 the flow becomes critical and between this value and Reynolds' number 4,000 a transitional state is reached where the flow is changing from laminar to turbulent, or vice versa. If the Reynolds' number is above 4,000 the flow is turbulent.

Thus, for a particular fluid being pumped down a pipe of constant diameter, it follows from the definition of Reynolds' number, that the point of onset of turbulence is dependent upon the velocity of the fluid being pumped. In turbulent flow, discrete molecules of fluid behave as separate entities creating vortices and cross currents which result in additional energy losses.

As the turbulent boundary layer develops, the laminar boundary layer reduces, athough even when the main flow has very high Reynolds' number there is still a layer adjacent to the pipe wall where the flow is laminar, this being known as the "laminar sub-layer". In the case of relatively smooth surfaces, the thickness of this layer can be sufficient to cover surface projections and the surface is said to be "hydraulically smooth". Where the surface is rough, however, the sub-layer can be so broken up by the projections that they act as bluff obstacles, giving rise to "form drag", which is almost independent of viscosity, and this results in still further energy losses.

It can be concluded, therefore, that when considering frictional energy losses in a pipe or other piece of fluid handling equipment, such frictional losses are in general greater for turbulent flow than for laminar flow and increase with increase in surface roughness of the equipment. In addition, turbulent flow can give rise to the detrimental erosion-corrosion effects discussed above. Although frictional losses can be initially reduced, therfore, by producing fluid handling equipment with highly polished metal surfaces, it can be seen that the benefits of such action may be relatively short lived due to these effects.

It can also be seen that ideally fabricated articles for use in fluid handling systems should have smooth surfaces and be resistant to typical erosion-corrosion effects. Additionally, it is postulated that by coating a metal surface with a composition having a low electronic affinity for water molecules, ie a hydrophobic material, it may be possible to induce "slip" at the boundary, thus delaying the onset of turbulent flow and reducing skin friction.

It is known in the art that one possible way of overcoming the problems of degradation of metal surfaces within fluid handling equipment is to apply specially formed resinous compositions which are intended to lower friction generated at the interface between the coated surface and the adjacent layer of a moving body of liquid. Some of these coatings have been derived from resinous compositions which incorporate glass flakes, but test work on pumps having some of its surfaces coated with such material, eg impeller blades, has shown that these give little or no improvement to pump efficiency. In addition, when handling liquids with entrained solids, glass flake containing coatings have been shown to be eroded away under abrasive action relatively rapidly. Furthermore, where turbulence occurs, the poor energy absorbing characteristics of such coatings results in severe cavitation erosion.

Another type of coating has been proposed which is claimed to employ a bisphenol A epoxy resin cured with an aromatic amine adduct.

It is the intention, in the formation of the composition of this other type of coating, to provide a coated surface which, when contacted by water, forms water globules which have a high angular contact with the resin surface such that substantially no "wetting" is obtained.

However, in tests carried out on pumps coated with this further material, it has been shown that although the peak efficiency of the pump may be increased, this often occurs at a significantly lower flow rate, ie the characteristics of the pump can be significantly affected. The principle reason for this is that such coatings are typically applied in very thick layers (1.5 mm) which in anything other than an extremely large fluid handling system represents a significant change of internal dimensions from initial design dimensions. As a result of this, it has been found that the benefits obtained from such coatings are limited to a very small range of pump designs, ie specifically those with large hydraulic passages. Furthermore, the proposed resinous composition is largely "unfilled" resin and has only small proportions of filler material. Pigment may be added, such as titanium dioxide, though in a proportion by volume of less than 2% and preferably just under 0.5%. However, by being largely unfilled, this coating is somewhat "soft" and, therefore, does not provide good abrasion resistant properties when exposed to the action of liquid with entrained solids. Accordingly, while there may be some advantages for certain specific speeds or conditions of surfaces of components treated with this material, these advantages are only sustained for reasonable periods when operating with water with no appreciable entrained solid content, eg normal potable water. However, the coatings are unsuitable for use with water with entrained solids, such as cooling water, or sewage, which often include abrasive sand and grit particles.

The invention, therefore, seeks to provide for coating of metal surfaces with a composition which both lowers frictional contact and also provides improved resistance to erosion-corrosion, without substantially altering the dimensions of the coated component parts of the equipment.

The solution to the problem of providing resistance to abrasion would normally involve the inclusion of suitable hard fillers in a resin base, but in the knowledge of the Applicants the level of such fillers required to have an appreciable effect would adversely affect the cavitation resistance of the coating when exposed to turbulent liquid contact. It has been found, however, that by combining relatively low levels of abrasion resistant filler and a lubricating filler it is possible to achieve high levels of abrasion resistance without significantly adversely effecting cavitation resistance. Furthermore, because of the low affinity which water molecules have for the lubricating filler, water in contact with the coating exhibits a significantly reduced tendency towards wetting out the surface compared to an uncoated metal surface. This effect can be further enhanced by the addition of a silicone slip additive, which also assists in achieving a perfectly smooth surface, which as indicated previously is desirable from the standpoint of reducing energy losses.

According to one aspect of the invention, there is provided a water conduit having a metal surface across which fluid flow is directed in use, the surface having a coating comprising a cured solventless composition comprising

a polymerisable resin selected from the group comprising: epoxy resin, isocyanate resin, polyester resin and vinyl resin;

a hardener;

an amount by volume of 2.81% up to 16.98% of an abrasion resistant filler;

an amount by volume up to 20% of a lubricating hydrophobic filler selected from the group consisting of polytetrafluoroethylene, polyethylene wax and blends thereof; and

a thixotroping agent.

Preferably, the composition is obtained by mixing the two components of a two component system, a first component including the liquid polymerisable resin and a second component including the hardener or cross linking initiator for the resin.

When an epoxy resin / hardener system is employed in one preferred composition, advantageously this is of a type which shows no tendency to bloom during solidification due to preferential reaction of the hardener with carbon dioxide in the atmosphere. This competitive reaction can lead to a substantial build up of a greasy layer at the surface of the coating which can in turn result in dust or other solid particles being trapped in it leading to surface roughening.

In addition, it is also preferable that the solidified epoxy resin system should be somewhat flexible in nature to enable it to more readily absorb and dissipate energy arising from impingement or cavitation attack. Examples of ways in which such flexibility may be introduced into the solidified polymeric resin backbone may involve a selection from the group consisting of elastomer modified epoxy resins, reactive diluents, plasticisers, urethane based modifiers, elastomer modified amine hardeners, urethane modified amine hardeners, polyamide hardeners, polyamidoamine hardeners, polyoxyalkyleneamine hardeners and mercaptan hardeners.

Because of the need to achieve a smooth surface finish it is also important that the viscosity of the resin system is not excessively high so that application characteristics are not impaired and air release can occur without leading to pinholes at the surface.

It is similarly also important that the resin system has a relatively long working life prior to solidification to enable the formulated composition to be applied prior to its viscosity increasing substantially which occurs as the onset of solidification approaches.

A preferred resin system to be used in the composition comprises a bisphenol A/bisphenol F diglycidyl ether and an adducted polyoxyalkyleneamine hardener.

Examples of suitable abrasion resistant filler material which may be incorporated into the composition to provide abrasion resistance, are, silicon carbide, aluminium oxide, calcined bauxite, ferrophosphorus and zirconium oxide. A preferred material is silicon carbide with an average particle size of 19 microns and maximum particle size of 35 microns (400 mesh). Particle size is important as the presence of a substantial quantity of oversized particles will result in a coated article with a rough surface finish.

The abrasion resistant filler may be present at up to 25% by volume but the preferred range is from 2.81% to 11.05% by volume.

The lubricating filler has the effect of both improving abrasion resistance and conferring a slippery hydrophobic surface to the coating, ie the forces of attraction between water and the coating are reduced.

One example of a lubricating filler which has this effect is polytetrafluoroethylene (PTFE) but even material such as polyethylene wax has a significant effect. A preferred cost effective lubricant is a blend of PTFE and polyethylene wax which is present in levels of up to 20% by volume. Above such a level the material causes thickening of the composition which adversely affects application characteristics. A preferred level of lubricating filler is 10.58% by volume.

A silicone slip additive may be incorporated in the composition to further improve the low frictional properties of the coating and promote the formation of a smooth surface finish. This additive should preferably be present at a level of no more than 2% by volume. A particularly preferred level is 0.53% by volume.

To impart opacity to the coating, the filler material may also include an opacifying filler, preferably in the form of one or more pigments, such as titanium dioxide, which may be present in an overall proportion by volume of at least 2%.

To ensure that the coating can be applied on a vertical surface at a minimum thickness of 250 microns without sagging, the rheology of the material is controlled by the use of a suitable thixotroping agent. One example of a particularly effective thixotroping agent is hydrophobic fumed silica. It is important that the level of additiom of such materials is carefully controlled as too high a level can result in the coating not being able to be applied sufficiently thinly, whilst too low a level will result in insufficient sag resistance. In the case of the material referred to above a particularly preferred level is 0.28% by volume.

Desirably, the nature of the composition is such that it can be readily applied to a metal surface by any convenient means in relatively thin but uniform layers, typically with a total thickness of 500-600 microns.

To ensure, as far as possible, that no pinholes extend through the coating, preferably the overall coating is preferably built up from two layers, the first of which may have one distinct colour, while the other may have a further distinct colour. By providing for good colour differentiation between layers the risk of inadvertently missing an area when applying the second coat is minimised.

According to a further apect of the invention there is provided a method of forming a coating on a metal surface employing a resinous coating composition according to said one aspect of the invention. The method may also include the application of a resinous coating composition provided with one or more of the preferred aspects of the resinous coating composition as referred to above.

The invention further provides a method of forming a coating on a metal surface which is intended to convey a moving body of material by application of a coating composition in a layer or layers having a thickness, or total thickness, of not more than 750 microns, in which the coating composition comprises a liquid polymerisable resin, hardener or cross-linking initiator for the resin, an abrasion resistant filler material, and a lubricating filler, to provide resistance to erosion-corrosion of the coated metal surface whilst at the same time reducing surface friction and thereby improving the material handling efficiency of the coating.

The invention still further provides a method of applying a resinous coating composition to a metal surface by application of a coating layer or layers having a thickness of not more than 750 microns in which the coating composition comprises an epoxy resin, an adducted aliphatic polyamine hardener, an abrasion resistant filler material present in a proportion by volume of up to 25% and a lubricating filler present in a proportion by volume of up to 20%, to provide resistance to erosion-corrosion of the coated metal surface whilst at the same time reducing surface friction.

A preferred filler material is silicon carbide present in a range from 0.5% up to 25% by volume. Surprisingly, tests have shown that advantageous effects are obtained even with relatively low percentage proportions of the filler material, in conjunction with a PTFE/polyethylene wax blend as a lubricant additive, and it is believed that this may be due, at least in part, to the presence of the lubricant additive. Examples of resinous coating compositions according to the invention will now be described in detail. It should be understood that the specific materials disclosed and their proportions, are for illustrative purposes only and within the generalised scope of the invention as defined in the aspects of the invention as set out above.

**Example 1**

An epoxy resin coating composition was prepared from 100 parts by volume (pbv) of a liquid bisphenol A/bisphenol F diglycidyl ether and 53.7 (pbv) of a modified adducted polyoxyalkylamine resin hardener. To reduce the liquid frictional properties of the composition and improve resistance to erosion-corrosion when formed as a cured coating on a metal surface, a suitable lubricant in the form of a PTFE/polyethylene wax blend was added at 21,5 pbv. To further improve the abrasion resistance of metal surfaces coated with the composition, abrasion resistant filler material in a proportion by volume of total composition of at least 0.5% was added. This, in combination with thixotroping agent and opacifying and colouring pigments takes the total filler content excluding lubricant to a minimum of 2.71% by volume. A silicone slip additive may also be added.

**Example 2**

The effect on abrasion resistance of varying the nature of the abrasion resistant filler was evaluated by incorporation of a number of such filler materials into the basic composition described in Example 1. A level of 60 parts abrasion resistant filler to 100 parts bisphenol A/bisphenol F diglycidyl ether by weight was adopted and for control purposes a composition was also included in which no abrasion resistant filler was added. The resulting compositions were as follows:

A) Control, incorporating no abrasion resistant filler
B) Incorporating zirconium oxide
C) Incorporating ferrophosphorus
D) Incorporating 400 mesh silicon carbide
E) Incorporating calcined bauxite

Evaluation of the abrasion resistance of the above compositions was carried out using a Teledyne Taber abraser. Four inch square mild steel panels with one eighth inch hole drilled centrally were abrasive blasted and coated with each of the freshly mixed coating compositions. These materials were similarly applied to flat smooth sheets of polypropylene and coated faces of the respective panels laid into the wet material, taking care to avoid air entrapment. Once fully hardened, the panels were delaminated from the polypropylene sheet and excess material dressed off. Taber abrasion measurements were carried out under wet conditions using H10 calibrade wheels and 1 Kg load. After wearing a track into the surface of the panels the wheels were refaced before running for 10 sets of 100 cycles, refacing the wheels after each run. Weight measurements were taken before and after each run in order that the total weight loss could be calculated, and from this the volume loss was determined. The results obtained for the 5 coating compositions described above are as follows:

| | A | B | C | D | E |
|---|---|---|---|---|---|
| Volume loss per 1000 cycles (cc) | 0.580 | 0.283 | 0.251 | 0.031 | 0.287 |

Thus, the benefits of using an abrasion resistant filler in the composition is clearly demonstrated and the particular benefits of using silicon carbide is also highlighted.

**Example 3**

In this example, the abrasion resistance of composition A was compared against similar compositions containing varying proporations of 400 mesh silicon carbide. These were as follows:

A) Control, incorporating no silicon carbide
F) Containing 0.28% by volume silicon carbide
G) Containing 0.57% by volume silicon carbide
H) Containing 1.42% by volume silicon carbide
J) Containing 2.81% by volume silicon carbide
K) Containing 5.46% by volume silicon carbide
L) Containing 11.05% by volume silicon carbide
M) Containing 16.98% by volume silicon carbide

Taber abrasion testing was carried out under the conditions described in Example 2 and gave the following results:

6

|  | A | F | G | H | J | K | L | M |
|---|---|---|---|---|---|---|---|---|
| Volume loss per 1000 cycles (cc) | 0.58 | 0.20 | 0.12 | 0.092 | 0.039 | 0.038 | 0.033 | 0.033 |

Thus, it can be seen that the preferred level of silicon carbide is in the range 2.81% - 11.05% by volume.

**Example 4**

The effect which the PTFE/polyethylene wax has upon the abrasion resistance of the compositions was demonstrated by taking system L and either removing the lubricating filler (System N) or increasing it to 43 parts per 100 parts by volume bisphenol A/bisphenol F diglycidyl ether (System P). Taber abrasion testing carried out under the conditions described in Example 2 gave the following results:

|  | L | N | P |
|---|---|---|---|
| Volume loss per 1000 cycles (cc) | 0.033 | 0.082 | 0.034 |

Thus, it can be seen that by eliminating the lubricating filler the abrasion resistance drops significantly whilst by doubling its level, abrasion resistance is substantially unchanged. The preferred level of lubricating filler is 10.58 parts by volume of the total coating composition.

**Example 5**

In this example the cavitation resistance of a number of the coating compositions described above were compared against that of a typical metal filled epoxy coating system. Cavitation resistance was measured using ultrasonic equipment according to an adaptation of ASTM G32-72. Mild steel test buttons were abrasive blasted and coated with a 500 micron thickness of the materials under test utilising a similar method to that described in Example 2, but employing shims at the edges of the specimens to control film thickness accurately. The prepared test specimens, when fully hardened, were located at a distance of 0.085 inch from the tip of an utrasonic probe oscillating at a frequency of 20 KHz and an amplitude of 50 microns, whilst immersed in water at 15ºC. Specimens were tested for successive intervals of 10 minutes duration with weight loss being measured and volume loss being calculated. Results of volume loss per hour were thus determined on the following compositions:

|  | A | J | K | L | Metal filled epoxy coating system |
|---|---|---|---|---|---|
| Cavitation loss per hour (cc) | 0.023 | 0.024 | 0.026 | 0.026 | 0.050 |

Thus, it can be seen that incorporation of silicon carbide into the coating compositions in substanial quantity has only a very small adverse effect on cavitation resistance which in comparison to that of a typical metal filled epoxy coating system is of a considerably higher order.

**Example 6**

This example illustrates the effect of replacement of the epoxy / polyamine resin system in composition L by a number of alternative polymer binders, these being:
R    Polyurethane based on aromatic polyisocyanate and polyester polyol.
S    Polyurethane / polyurea based upon aliphatic polyisocyanate, aromatic polyamine and aliphatic polyol.
T    Polyester resin based on phthalic / maleic anhydride and aliphatic glycol crosslinked with benzoyl peroxide.
U    Vinyl ester crosslinked with methylethylketone peroxide.
Comparison of the wet Taber Abrasion resistance as detailed in example 2 and cavitation resistance as detailed in example 5 revealed the following:

7

| | L | R | S | T | U |
|---|---|---|---|---|---|
| Abrasion - volume loss per 1000 cycles (ccs) | 0.033 | 0.026 | 0.044 | 0.062 | 0.059 |
| Cavitation - volume loss per hour (ccs) | 0.026 | 0.016 | 0.013 | 0.030 | 0.029 |

Thus it can be seen that similarly good results can be achieved from other polymer systems when formulated according to the preferred embodiments of the invention and in particular excellent results are obtained from composition R.

**Example 7**

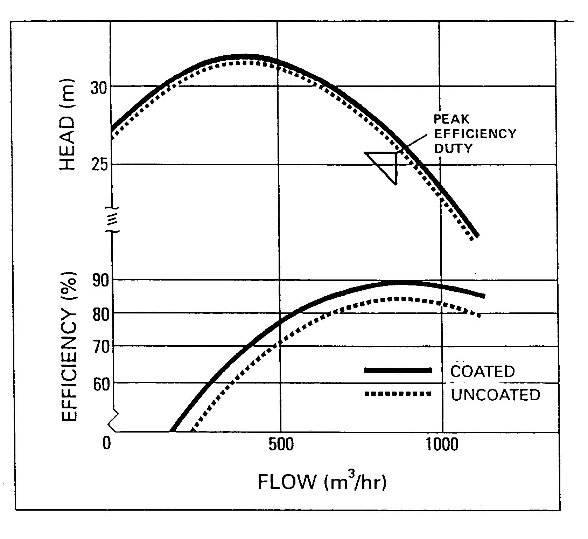

The ability of resinous coating compositions according to the invention to reduce frictional losses in fluid handling systems is illustrated by independant testing carried out by the National Engineering Laboratory on a single stage end suction centrifugal pump with 10 inch suction and discharge branches. This pump, in uncoated condition, running at 1,300 rpm, was found to deliver 875 cubic metres of water per hour at 26.5 metres head with a peak efficiency of 83.5% (efficiency being defined as the ratio of water power output to mechanical power at the shaft). The results presented in the accompanying Graph 1 show that after coating the casing and impellers of the pump with composition L, an average increase in peak efficiency of 5% was obtained with the largest efficiency gain of 6% at higher flow rates. Significantly, there was minimal change in the pump head/flow characteristics with the peak efficiency duty comparable to that of the uncoated pump.

While examples have been described above of the improvements in efficiency of coated metal surfaces which are intended to convey liquids and in particular water or aqueous solutions, it should be understood that a composition according to the invention may be applied advantageously to metal surfaces which are intended to convey gases, and also solid materials (especially particulate material) and which solid materials may be at least partly fluidised.

**Claims**

1. A water conduit having a metal surface across which fluid flow is directed in use, the surface having a coating comprising a cured solventless composition comprising:
    a polymerisable resin selected from the group comprising: epoxy resin, isocyanate resin, polyester resin and vinyl ester resin;
    a hardener;
    an abrasion resistant filler selected from the group comprising: silicon carbide, aluminium oxide, calcined bauxite, ferrophosphorus, zirconium oxide;
    a lubricating hydrophobic filler selected from the group consisting of polytetrafluoroethylene, polyethylene wax and blends thereof; and
    a thixotroping agent.

2. A conduit as claimed in claim 1 wherein the hardener is an adducted amine hardener.

3. A conduit as claimed in claim 2 wherein the hardener is polyoxyalkyleneamine.

4. A conduit as claimed in any preceding claim wherein the abrasion resistant filler comprises 2.81% to 11.05% of said solventless coating composition by volume of silicon carbide with an average particle size of 19 microns and a maximum particle size of 35 microns.

5. A conduit as claimed in any preceding claim wherein the thixotroping agent comprises fumed silica.

6. A conduit as claimed in any preceding claim wherein the coating has a maximum thickness of 750 microns.

7. A conduit as claimed in any preceding claim wherein the conduit comprises a pipe.

8. A conduit as claimed in any preceding claim wherein the conduit comprises a pump.

9. A method of improving the liquid handling efficiency of a metal surface across which fluid flows is directed in use including the steps of

(a) applying a solventless coating compositions to the metal surface, the composition comprising;

a polymerisable resin selected from the group comprising: epoxy resin, isocyanate resin, polyester resin and vinyl ester resin;

a hardener;

an abrasion resistant filler selected from the group consisting of: silicon carbide, aluminium oxide, calcined bauxite, ferrophosphorus, zirconium oxide and mixtures thereof;

a lubricating hydrophobic filler selected from the group comprising: polytetrafluoroethylene, polyethylene wax and blends thereof; and

a thixotroping agent; and

(b) curing the composition on the metal surface.

**Patentansprüche**

1. Wasserleitung mit einer metallischen Oberfläche, über welche im Gebrauch eine Strömungsmittelströmung geleitet wird und die eine Beschichtung aufweist, welche eine ausgehärtete, lösungsmittelfreie Zusammensetzung umfaßt, die ihrerseits umfaßt:

ein polymerisierbares Harz aus der Gruppe, welche umfaßt: Epoxidharz, Isozyanatharz, Polyesterharz und Vinylesterharz;

einen Härter;

einen abrasionsbeständigen Füllstoff aus der Gruppe, welche umfaßt: Siliciumkarbid, Aluminiumoxid, gebranntes Bauxit, Ferrophosphor, Zirkonoxid;

einen schmierenden hydrophoben Füllstoff aus der Gruppe, welche aus Polytetrafluoräthylen, Polyäthylenwachs und Mischungen hieraus besteht; und

ein thixotropes Mittel.

2. Leitung noch Anspruch 1, bei welcher der Härter ein adduktierter Aminhärter ist.

3. Leitung nach Anspruch 2, bei welcher der Härter Polyoxyalkylenamin ist.

4. Leitung nach einem der vorhergehenden Ansprüche, bei welcher der abrasionsbeständige Füllstoff Siliziumkarbid in einer Menge von 2,81 bis 11,05 Volumenprozent der lösungsmittelfreien Beschichtungskomponente mit einer durchschnittlichen Teilchengröße von 19 Mikron und einer maximalen Teilchengröße von 35 Mikron umfaßt.

5. Leitung nach einem der vorhergehenden Ansprüche, bei welcher das thixotrope Mittel abgedampftes Silicamaterial umfaßt.

6. Leitung, nach einem der vorhergehenden Ansprüche, bei welcher die Beschichtung eine maximale Dicke von 750 Mikron aufweist.

7. Leitung nach einem der vorhergehenden Ansprüche, bei welcher die Leitung ein Rohr umfaßt.

8. Leitung nach einem der vorhergehenden Ansprüche, bei welcher die Leitung eine Pumpe umfaßt.

9. Verfahren zur Verbesserung der Flüssigkeits-Handhabungseigenschaften einer metallischen Oberfläche, über welche im Gebrauch eine Strömungsmittelströmung geleitet wird, mit den folgenden Schritten:

(a) eine lösungsmittelfreie Beschichtungszusammensetzung wird auf die metallische Oberfläche aufgebracht, wobei die Zusummensetzung umfaßt:

ein polymerisierbares Harz aus der Gruppe welche umfaßt: Epoxidharz, Isozyanatharz, Polyesterharz und Vinylesterharz;

einen Härter;

einen abrasionsbeständigen Füllstoff aus der Gruppe, welche besteht aus: Siliciumkarbid, Aluminiumoxid, gebranntem Bauxit, Ferrophosphor, Zirkonoxid und Mischungen hieraus;

einen schmierenden hydrophoben Füllstoff aus der Gruppe, welche umfaßt: Polytetrafluoräthylen, Polyäthylenwachs und Mischungen hieraus; und

ein thixotropes Mittel; und

(b) Aushärten der Zusammensetzung auf der metallischen Oberfläche.

**Revendications**

**1.** Conduite d'eau ayant une surface métallique dans laquelle un écoulement de fluide est acheminé en service, la surface ayant un revêtement comprenant une composition sans solvant durcie comportant :
une résine polymérisable choisie dans le groupe formé des résines époxy, des résines isocyanates, des résine, de polyester et des résines vinyliques,
un durcissant,
une charge résistant à l'abrasion choisie dans le groupe formé du carbure de silicium, de l'oxyde d'aluminium, de la bauxite calcinée, du ferrophosphore, de l'oxyde de zirconium,
une charge hydrophobe lubrifiante choisie dans le groupe formé du polytétrafluoroéthylène, de la cire de polyéthylène et de leurs mélanges, et
un agent thixotropique.

**2.** Conduite selon la revendication 1, dans laquelle le durcisseur est un durcisseur d'amine d'addition.

**3.** Conduite selon la revendication 2, dans laquelle le durcisseur est de la polyoxyalkylèneamine.

**4.** Conduite selon l'une quelconque des revendications précédentes, dans laquelle la charge résistant a l'abrasion constitue 2,81 à 11,05 % de ladite composition de revêtement sans solvant en volume de carbure de silicium présentant un calibre particulaire moyen de 19 micromètres et un calibre particulaire maximum de 35 micromètres.

**5.** Conduite selon l'une quelconque des revendications précédentes, dans laquelle l'agent thixotropique comprend de la silice fumée.

**6.** Conduite selon l'une quelconque des revendications précédentes, dans laquelle le revêtement a une épaisseur maximum de 750 micromètres.

**7.** Conduite selon l'une quelconque des revendications précédentes, dans laquelle la conduite est un tuyau.

**8.** Conduite selon l'une quelconque des revendications précédentes, dans laquelle la conduite est une pompe

**9.** Procédé d'amélioration de l'efficacité de manipulation de fluide d'une surface métallique dans laquelle un écoulement de fluide est acheminé en service, comprenant les stades suivants :
(a) on applique une composition de revêtement sans solvant à la surface métallique, la composition comportant :
une résine polymérisable choisie dans le groupe formé des résines époxy, des résines isocyanates, des résines de polyester et des résines vinyliques,
un durcissant,
une charge résistant à l'abrasion choisie dans le groupe formé du carbure de silicium, de l'oxyde d'aluminium, de la bauxite calcinée, du ferrophosphore, de l'oxyde de zirconium, et de leurs mélanges,
une charge hydrophobe lubrifiante choisie dans le groupe formé du polytétrafluoroéthylène, de la cire de polyéthylène et de leurs mélanges, et
un agent thixotropique, et
(b) on durcit la composition sur la surface métallique.